# EUROPEAN PATENT APPLICATION

(11) **EP 4 585 562 A1**
(43) Date of publication of application: **16.07.2025**
(21) Application number: 24305096.0
(22) Date of filing: 15.01.2024
(51) Int. Cl.: C01B 33/20, C01B 33/24, C04B 35/22, C08K 3/34, C08K 5/00, C08K 7/04, C08K 7/10, C09C 1/00

(54) **SYNTHETIC ACICULAR WOLLASTONITE**

(71) Applicant: ImerTech SAS, 75015 Paris (FR)
(72) Inventor: JAKOB, Alexandra, Toulouse (FR); LEYDIER, Marlene, L'ISLE D'ABEAU (FR); JACQUEMOT, Remy, L'ISLE D'ABEAU (FR); KEBLI, Farida, CHASSIEU (FR)
(74) Representative: Faure-Geors, Vanessa

(57) **Abstract**

A method of making a synthetic acicular wollastonite, the method comprising: providing a pseudowollastonite precursor; and heating the pseudowollastonite precursor at a temperature of from about 950 °C to about 1200 °C, in the presence of a flux, to form the synthetic acicular wollastonite.

## Description

### TECHNICAL FIELD

The present disclosure concerns new synthetic acicular wollastonite, methods of making such synthetic acicular wollastonite, methods and uses associated with such synthetic acicular wollastonite, and paint compositions containing such synthetic acicular wollastonite.

### BACKGROUND

Wollastonite is a naturally occurring mineral form of calcium inosilicate (CaSiOs). Naturally occurring wollastonite particles are acicular (i.e., needle or fibre-like). Natural wollastonite is widely used in paints because the acicular shape of natural wollastonite enables better light refraction that leads to better opacity in decorative paints.

Nevertheless, natural wollastonite has several disadvantages that leads to limited use in this application. For example, natural wollastonite may contain traces of asbestos that hinders its use due to safety issues and the purity of natural wollastonite may be limited. Furthermore, being a natural resource, wollastonite is becoming scarce and, consequently, expensive.

Accordingly, it would be beneficial to provide a synthetic acicular wollastonite with improved properties. Improvements in the properties of paint compositions typically containing wollastonite would also be desirable.

### SUMMARY

According to a first aspect, there is provided a method of making a synthetic acicular wollastonite, the method comprising:
(i) providing a pseudowollastonite precursor; and
(ii) heating the pseudowollastonite precursor at a temperature of from about 950 °C to about 1200 °C, in the presence of a flux, to form the synthetic acicular wollastonite.

According to a second aspect, there is provided a synthetic acicular wollastonite, the synthetic acicular wollastonite obtained or obtainable by the method according to the first aspect.

According to a third aspect, there is provided a synthetic acicular wollastonite having a contact angle at 0.1 seconds from about 40° to about 120°, for example, from about 45° to about 95°.

According to a fourth aspect, there is provided a paint composition comprising the synthetic acicular wollastonite according to the second or third aspect.

According to a fifth aspect, there is provided use of the synthetic acicular wollastonite according to second or third aspect in a paint composition to:
a. increase the brightness of the paint composition; and/or
b. increase the opacity of the paint composition;
as compared to a reference paint composition comprising the same amount of natural wollastonite or a wollastonite substitute not according to the second or third aspect.

According to a sixth aspect, there is provided a method of:
a. increasing the brightness of a paint composition; and/or
b. increasing the opacity of a paint composition;
as compared to a reference paint composition comprising a reference amount of natural wollastonite or a wollastonite substitute not according to the second or third aspect, wherein the method comprises adding the synthetic acicular wollastonite according to the second or third aspect to the paint composition in the reference amount.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

### FIGURES

Embodiments will now be described by way of example only, with reference to the Figures, in which:
Figure 1a provides Scanning Electron Micrographs (SEMs) showing the microstructure of the synthetic acicular wollastonite prepared according to Example 1 at a magnification of 1000 times.
Figure 1b provides Scanning Electron Micrographs (SEMs) showing the microstructure of the synthetic acicular wollastonite prepared according to Example 1 at a magnification of 5000 times.
Figure 2a provides a picture of the contact angle measurement of natural wollastonite M4W using the Fibrodat equipment.
Figure 2b provides a picture of the contact angle measurement of synthetic acicular wollastonite using the Fibrodat equipment.
Figure 3 provides TGA and DTG plots for synthetic acicular wollastonite.
Figure 4 provides TGA and DTG plots for reference natural wollastonite Nyad M1250.
Figure 5 provides viscosity values of decorative paint formulations containing natural wollastonite and synthetic acicular wollastonite.
Figure 6 provides brightness Y values for paint formulations containing synthetic acicular wollastonite and natural wollastonite Nyad M1250.
Figure 7 provides gloss values for paint formulations containing synthetic acicular wollastonite and natural wollastonite Nyad M1250.
Figure 8 provides opacity values for paint formulations containing synthetic acicular wollastonite and natural wollastonite Nyad M1250.

### DETAILED DESCRIPTION

The present invention relates generally to synthetic acicular wollastonite, a method of making said synthetic acicular wollastonite, a paint composition containing said synthetic acicular wollastonite, and methods and uses associated with said synthetic acicular wollastonite.

Synthetic acicular wollastonite according to the present invention has several advantages. These advantages include:
- The synthetic acicular wollastonite according to the present invention does not contain asbestos. This has obvious health and safety benefits.
- Due to its smaller size and anisotropy, the synthetic acicular wollastonite can be added in paint formulations to increase the opacity.
- The synthetic acicular wollastonite according to the present invention has a higher purity compared to its natural wollastonite counterpart.
- The synthetic acicular wollastonite according to the present invention has improved optical properties compared to its natural wollastonite counterpart.
- The synthetic acicular wollastonite according to the present invention is more hydrophobic than its natural wollastonite counterpart. The improved hydrophobic nature of the synthetic acicular wollastonite according to the present invention means that hydrophobic treatment (which is common for natural wollastonite) may be avoided.

Paint compositions containing the synthetic acicular wollastonite according to the present invention also have several advantages. In particular, the paint compositions containing the synthetic acicular wollastonite according to the present invention have improved optical properties, improved coverage, similar mechanical properties and similar corrosion resistance compared to paint compositions containing natural wollastonite.

### Method of making a synthetic acicular wollastonite

According to the present invention, there is provided a method of making a synthetic acicular wollastonite, the method comprising:
(i) providing a pseudowollastonite precursor; and
(ii) heating the pseudowollastonite precursor at a temperature of from about 950 °C to about 1200 °C, in the presence of a flux, to form the synthetic acicular wollastonite.

### Providing a pseudowollastonite precursor

The method of the present invention comprises the step of providing a pseudowollasonite precursor.

The pseudowollastonite precursor comprises (e.g., consist of, or consist essentially of) calcium silicate (i.e., CaSiOs). The pseudowollastonite precursor is a form of CaSiOs crystallised in the monoclinic crystal system, prismatic class, with the space group C2/c. The pseudowollastonite precursor is also known as wollastonite 7T, β-wollastonite or cyclowollastonite.

The pseudowollastonite precursor may be natural or synthetic.

In an embodiment of the present invention, the pseudowollastonite precursor is natural, and is derived in nature from ultrahigh-temperature combustion of metamorphic and igneous rocks.

In an embodiment of the present invention, the pseudowollastonite precursor is synthetic. The synthetic pseudowollastonite may be prepared by a method comprising the steps of: providing a mixture comprising a silica-containing material and a calcium-containing material; heating the mixture at a temperature of from about 1100 °C to about 1500 °C, optionally in the presence of a flux, to form the synthetic pseudowollastonite; and cooling the synthetic pseudowollastonite to a temperature of about 20 °C to about 25 °C.

For example, the mixture may comprise one single silica-containing material and one single calcium-containing material. Alternatively, the mixture may comprise one single silica-containing material and more than one calcium-containing materials. Further alternatively, the mixture may comprise more than one silica-containing materials and one single calcium-containing material. Further alternatively, the mixture may comprise more than one silica-containing materials and more than one calcium-containing materials.

The mixture may comprise the silica-containing material(s) and the calcium-containing material(s) in appropriate amounts such that the ratio of calcium (Ca) atoms to silicon (Si) atoms in the mixture is no less than about 1:2, for example, no less than about 3:4, or no less than about 9:10, or no less than about 19:20. The mixture may comprise the silica-containing material(s) and the calcium-containing material(s) in appropriate amounts such that the ratio of calcium (Ca) atoms to silicon (Si) atoms in the mixture is no more than about 2:1, for example, no more than about 4:3, or no more than about 9:10, or no more than about 20:19. The mixture may comprise the silica-containing material(s) and the calcium-containing material(s) in appropriate amounts such that the ratio of calcium (Ca) atoms to silicon (Si) atoms in the mixture is from about 1:2 to about 2:1, for example, from about 3:4 to about 4:3, or from about 9:10 to about 10:9, or from about 19:20 to about 20:19. For example, the mixture may comprise the silica-containing material(s) and the calcium-containing material(s) in appropriate amounts such that the ratio of calcium (Ca) atoms to silicon (Si) atoms in the mixture is about 1:1. It will be understood that the relative amounts of the silica-containing material(s) and the calcium-containing material(s) in the mixture needed to achieve a given ratio of calcium (Ca) atoms to silicon (Si) atoms will depend on the composition of the particular silica-containing material(s) and calcium-containing material(s) used. The ratio of calcium (Ca) atoms to silicon (Si) atoms can be determined from the quantities of the calcium-containing material(s) and the silica-containing material(s) added to the mixture and the composition of the calcium-containing material(s) and the silica-containing material(s). The compositions of the calcium-containing material(s) and the silica-containing material(s) can be determined using X-ray based methods, for example, Energy Dispersive X-Ray Fluorescence (EDXRF) (for example using the Xepos instrument available from SPECTRO A. I. GmbH).

The mixture may comprise the silica-containing material(s) and the calcium-containing material(s) in appropriate amounts such that the weight ratio of the CaO equivalent of the calcium content (as determined by EDXRF) to the SiO₂ equivalent of the silicon content (as also determined by EDXRF) is no less than about 1:2, for example, no less than about 3:4, or no less than about 4:5, or no less than about 17:20, or no less than about 9:10, or no less than about 19:20.

The mixture may comprise the silica-containing material(s) and the calcium-containing material(s) in appropriate amounts such that the weight ratio of the CaO equivalent of the calcium content (as determined by EDXRF) to the SiO₂ equivalent of the silicon content (as also determined by EDXRF) is no more than about 2:1, for example, no more than about 4:3, or no more than about 5:4, or no more than about 20:17, or no more than about 9:10, or no more than about 20:19, or no more than about 19:20, or no more than about 9:10, or no more than about 17:20.

In addition to the silica-containing material(s) and the calcium-containing material(s), the mixture may contain one or more other materials (e.g., one or more materials which do not contain silica or calcium in significant amounts, e.g., one or more materials which are substantially silica- and/or calcium-free) such as magnesia (i.e., MgO) and/or soda ash (i.e., Na₂CO₃).

The method may comprise milling the silica-containing material(s) and the calcium-containing material(s) together. The method may comprise milling the silica-containing material(s) and the calcium-containing material(s) together to achieve a d₈₀, by laser, from about 10 µm to about 400 µm, for example, from about 20 µm to about 60 µm.

The method may comprise milling the silica-containing material(s) and the calcium-containing material(s) together in any suitable type of mill, such as a ball mill, a roller mill or a jet mill.

The method may comprise heating the mixture in a kiln at about 1400°C to 1450°C, such as at 1425 °C in for example, a rotary kiln. The temperature at which the mixture is heated may be the temperature as measured at the hot spot of the kiln.

The silica-containing material may be any suitable material which contains silica (i.e., SiO₂).

The silica-containing material may comprise no less than about 50 wt. %, for example, no less than about 75 wt. %, or no less than about 90 wt. %, or no less than about 95 wt. %, or no less than about 99 wt. %, or no less than about 99.9 wt. %, silica. For example, the silica-containing material may consist, or consist essentially, of silica.

The silica-containing material may be selected from silica sand, quartz, fused quartz, tridymite, cristobalite, keatite, moganite, coesite, stishovite, seifertite, melanophlogite, fumed silica, silica fume, silica gel, silica aerogel, and/or any combination thereof

Preferably, the silica-containing material comprises low amounts of impurities, such as low amounts of chromophore oxides such as from about 0.009 wt.% to about 0.2 wt.% Fe₂O₃, for example, no more than about 0.1 wt. %, for example, no more than about 0.05 wt. % Fe₂O₃. Wherein the wt. % is expressed in terms of the oxide equivalents of the elements present.

Preferably, the silica-containing material also comprises low amounts of TiO₂ such a no more than about 0.1 wt. %, for example, no more than about 0.05 wt. %, or no more than 0.01 wt.% TiO₂. Wherein the wt. % is expressed in terms of the oxide equivalents of the elements present.

Optionally, the silica-containing material comprises, expressed in terms of the oxide equivalents of the elements present:
no more than about 2 wt. %, for example, no more than about 1.5 wt. %, Al₂O₃;
no more than about 1 wt. %, for example, no more than about 0.1 wt. %, K₂O;
no more than about 1 wt. %, for example, no more than about 0.1 wt. %, TiO₂;
no more than about 3 wt. %, for example, no more than about 1.5 wt. %, MgO;
no more than about 1 wt. %, for example, no more than about 0.1 wt. %, Na₂O; and/or
no more than about 1 wt. %, for example, no more than about 0.1 wt. %, P₂O₅.

Particle size properties of particulate materials may be determined by laser diffraction. In the laser diffraction technique, particle size properties are measured by wet Malvern laser scattering (standard ISO 13320-1:2020). In this technique, the size of particles in powders, suspensions and emulsions may be measured using the diffraction of a laser beam, based on the application of Fraunhofer theory. Such a machine, for example a Malvern Mastersizer 3000 - Hydro LV (as supplied by Malvern instruments) provides measurements and a plot of the cumulative percentage by volume of particles having a size, referred to in the art as the "equivalent spherical diameter" (e.s.d), less than given e.s.d values. The mean particle size d₅₀ is the value determined in this way of the particle e.s.d. at which there are 50% by weight of the particles which have an equivalent spherical diameter less than that d₅₀ value. For the avoidance of doubt, the measurement of particle size using laser light scattering is not an equivalent method to a sedimentation method.

The silica-containing material may have a d₁₀, by laser from about 0.5 µm to about 5.0 µm, for example, from about 1.0 µm to about 3.0 µm, or from about 1.5 µm to about 2.5 µm, or from about 1.5 µm to about 2.1 µm, or from about 2.0 µm to about 2.1 µm.

The silica-containing material may have a d₂₀, by laser, from about 2.0 µm to about 10.0 µm, for example, from about 3.0 µm to about 9.0 µm, or from about 4.0 µm to about 8.0 µm, or from about 5.0 µm to about 7.0 µm, or from about 5.0 µm to about 6.0 µm, or from about 5.5 µm to about 6.0 µm.

The silica-containing material may have a d₅₀, by laser, from about 15.0 µm to about 45.0 µm, for example, from about 17.5 µm to about 40.0 µm, or from about 20.0 µm to about 40.0 µm, or from about 25.0 µm to about 35.0 µm, or from about 27.0 µm to about 32.0 µm, or from about 28.0 µm to about 29.0 µm.

The silica-containing material may have a d₈₀, by laser, from about 50.0 µm to about 100.0 µm, for example, from about 55.0 µm to about 90.0 µm, or from about 60.0 µm to about 80.0 µm, or from about 65.0 µm to about 75.0 µm, or from about 69.0 µm to about 72.0 µm, or from about 70.0 µm to about 71.0 µm.

The silica-containing material may have a d₉₀, by laser, from about 70.0 µm to about 130.0 µm, for example, from about 80.0 µm to about 120.0 µm, or from about 90.0 µm to about 110.0 µm, or from about 95.0 µm to about 105.0 µm, or from about 95.0 µm to about 100.0 µm, or from about 96.0 µm to about 98.0 µm, or from about 97.0 µm to about 98.0 µm.

The silica-containing material may have a d₉₉, by laser, from about 120.0 µm to about 200.0 µm, for example, from about 130.0 µm to about 190.0 µm, or from about 140.0 µm to about 180.0 µm, or from about 150.0 µm to about 170.0 µm, or from about 155.0 µm to about 165.0 µm, or from about 160.0 µm to about 162.0 µm.

Preferably the silicon-containing material is sand such as silica sand.

The calcium-containing material may be any suitable material which contains calcium (i.e., Ca). The calcium content of the calcium-containing material may be determined using X-ray based methods, for example, Energy Dispersive X-Ray Fluorescence (EDXRF) (for example using the Xepos instrument available from SPECTRO A. I. GmbH). The calcium content of the calcium-containing material determined using EDXRF may be expressed in terms of the oxide equivalent (i.e., CaO equivalent) of the calcium present, as is standard in the field.

Expressed in terms of the oxide equivalent, the calcium-containing material may comprise no less than about 50 wt. %, for example, no less than about 75 wt. %, or no less than about 90 wt. %, or no less than about 95 wt. %, or no less than about 99 wt. %, or no less than about 99.9 wt. %, of CaO.

Preferably, the calcium-containing material comprises low amounts of impurities, such as low amounts of chromophore oxides, such as from about 0.009 wt.% to about 0.2 wt.% Fe₂O₃, for example, no more than about 0.1 wt. %, for example, no more than about 0.05 wt. % Fe₂O₃. Wherein the wt. % is expressed in terms of the oxide equivalents of the elements present.

Advantageously, the calcium-containing material comprises than no more than about 0.1 wt. %, for example, no more than about 0.05 wt. % TiO₂, or no more than 0.01 wt. % TiO₂. Wherein the wt. % is expressed in terms of the oxide equivalents of the elements present.

Optionally, the calcium-containing material comprises, expressed in terms of the oxide equivalents of the elements present:
no more than about 2 wt. %, for example, no more than about 1.5 wt. %, Al₂O₃;
no more than about 1 wt. %, for example, no more than about 0.1 wt. %, K₂O;
no more than about 1 wt. %, for example, no more than about 0.1 wt. %, TiO₂;
no more than about 3 wt. %, for example, no more than about 1.5 wt. %, MgO;
no more than about 1 wt. %, for example, no more than about 0.1 wt. %, Na₂O; and/or
no more than about 1 wt. %, for example, no more than about 0.1 wt. %, P₂O₅.

The calcium-containing material may contain calcium in the form of one or more calcium-containing compounds. The calcium-containing material may consist of, or consist essentially of, or be, one or more calcium-containing compounds.

The calcium-containing material may contain calcium in the form of one or more oxides, carbonates and/or silicates of calcium, such as calcium oxide (i.e., CaO), quick lime, slaked lime, calcium carbonate (i.e., CaCO₃) and/or calcium silicate (i.e., Ca₂SiO₄).

The calcium-containing material may consist essentially of, consist of, or be, a combination of two or more of calcium oxide (i.e., CaO), calcium carbonate (i.e., CaCO₃) and calcium silicate (i.e., Ca₂SiO₄).

The calcium-containing material may be selected from lime, quick lime, calcite, aragonite, vaterite, limestone, chalk, marble, travertine, ground calcium carbonate, precipitated calcium carbonate, calcium silicate, dolomite, and/or any combination thereof.

PCC may be made by methods well-known in the art. For instance, PCC may be prepared by one or more of the methods described in WO03/004414, the contents of which are incorporated herein by reference, particularly page 2, line 11 to page 3, line 38; page 4, line 29 to page 5, line 6; and page 5, line 36 to page 6, line 28 as well as examples 4 and 5.

The calcium-containing material may be a particulate material.

The calcium-containing material may have a d₁₀, by laser, from about 0.5 µm to about 6.0 µm, for example, from about 1.0 µm to about 5.0 µm, or from about 2.0 µm to about 4.0 µm, or from about 2.5 µm to about 3.5 µm, or from about 2.8 µm to about 3.1 µm, or from about 2.9 µm to about 3.0 µm.

The calcium-containing material may have a d₂₀, by laser, from about 5.0 µm to about 20.0 µm, for example, from about 7.0 µm to about 18..0 µm, or from about 9.0 µm to about 17.0 µm, or from about 10.0 µm to about 16.0 µm, or from about 11.0 µm to about 15.0 µm, or from about 12.0 µm to about 15.0 µm, or from about 12.0 µm to about 14.0 µm, or from about 13.5 µm to about 13.7 µm.

The calcium-containing material may have a d₈₀, by laser, from about 80 µm to about 300 µm, for example, from about 100 µm to about 250 µm, or from about 120 µm to about 200 µm, or from about 130 µm to about 190 µm, or from about 140 µm to about 180 µm, or from about 150 µm to about 170 µm, or from about 160 µm to about 170 µm, or from about 160 µm to about 165 µm.

The calcium-containing material may have a dso, by laser, from about 300 µm to about 900 µm, for example, from about 400 µm to about 800 µm, or from about 500 µm to about 700 µm, or from about 550 µm to about 750 µm, or from about 600 µm to about 700 µm, or from about 600 µm to about 650 µm, or from about 610 µm to about 630 µm, or from about 615 µm to about 620 µm.

The calcium-containing material may have a d₉₀, by laser, from about 600 µm to about 1500 µm, for example, from about 700 µm to about 1400 µm, or from about 800 µm to about 1300 µm, or from about 800 µm to about 1200 µm, or from about 900 µm to about 1100 µm, or from about 950 µm to about 1100 µm, or from about 1000 µm to about 1100 µm, or from about 1000 µm to about 1050 µm, or from about 1030 µm to about 1050 µm.

The calcium-containing material may have a d₉₅, by laser, from about 1500 µm to about 5000 µm, for example, from about 1600 µm to about 4000 µm, or from about 1700 µm to about 3000 µm, or from about 1800 µm to about 2900 µm, or from about 1900 µm to about 2800 µm, or from about 2000 µm to about 3000 µm, or from about 2200 µm to about 2700 µm, or from about 2300 µm to about 2600 µm, or from about 2400 µm to about 2600 µm, or from about 2450 µm to about 2500 µm, or from about 2480 µm to about 2500 µm.

Preferably, the calcium-containing material is limestone or lime. More preferably, the calcium-containing material is lime.

### To form the synthetic acicular wollastonite

The method of the present invention also comprises the step of heating the pseudowollastonite precursor at a temperature of from about 950 °C to about 1200 °C, in the presence of a flux, to form the synthetic acicular wollastonite.

### Temperature

The pseudowollastonite precursor may be heated to a temperature of from about 950 °C to about 1200 °C. For example, the pseudowollastonite precursor may be heated starting from room temperature at a defined heating rate until it reaches the heating temperature of from about 950 °C to about 1200 °C. The heating rate may be from about 100 °C per hour to about 1000 °C per hour.

In accordance with the present invention, the pseudowollastonite precursor is heated at a temperature of from about 1000 °C to about 1100 °C, conveniently from about 1050 °C to about 1100 °C, more conveniently from about 1060 °C to about 1080 °C, even more conveniently at 1070 °C.

The pseudowollastonite precursor may be heated at the above mentioned temperature, for a period of at least 2 hours. Preferably, the pseudowollastonite precursor is heated for a period of at least about 4 hours, conveniently at least about 6 hours, more conveniently at least about 8 hours.

### Flux

The flux may be crystalline or amorphous.

The flux may be selected from the group consisting of hydrogen, lithium, boron, magnesium, calcium, and/or sodium, under the form of carbonate, oxide, halide, silicate and/or borate.

For example, the flux may be selected from the group consisting of an alkali metal carbonate, an alkali metal oxide, an alkali metal halide, an alkali metal silicate, an alkali metal borate, an alkaline earth metal carbonate, an alkaline earth metal oxide, an alkaline earth metal halide, an alkaline earth metal silicate, an alkaline earth metal borate, a group 13 element oxide, a hydrogen borate, and combinations thereof.

The flux may be selected from the group consisting of lithium tetraborate (Li₂B₄O₇), lithium metaborate (LiBO₂), lithium carbonate (Li₂CO₃), sodium carbonate (Na₂CO₃), sodium iodide (Nal), boric acid (B(OH)₃), diboron trioxide (B₂O₃), hydrated calcium borate (such as colemanite (Ca₂B₆O₁₁·5H₂O) or Gerstley colemanite), hydrate magnesium silicate (such as talc), calcium magnesium carbonate (such as dolomite), and combinations thereof. Preferably, the flux is selected from the group consisting of lithium tetraborate (Li₂B₄O₇), lithium metaborate (LiBO₂), lithium carbonate (Li₂CO₃), sodium carbonate (Na₂CO₃), sodium iodide (Nal), boric acid (B(OH)₃), diboron trioxide (B₂O₃), colemanite (Ca₂B₆O₁₁·5H₂O), Gerstley colemanite, and combinations thereof.

The flux may also comprise lithium tetraborate (Li₂B₄O₇) in combination with at least one flux material other than lithium tetraborate material (Li₂B₄O₇). Preferably, the flux comprises lithium tetraborate (Li₂B₄O₇) and at least one of lithium metaborate (LiBO₂), lithium carbonate (Li₂CO₃), sodium carbonate (Na₂CO₃), sodium iodide (Nal), boric acid (B(OH)₃), diboron trioxide (B₂O₃), hydrated calcium borate (such as colemanite (Ca₂B₆O₁₁·5H₂O) or Gerstley colemanite), hydrate magnesium silicate (such as talc), or calcium magnesium carbonate (such as dolomite). Even more preferably, the flux comprises (e.g., consists of, or essentially consists of lithium tetraborate (Li₂B₄O₇) and lithium metaborate (LiBO₂).

The flux may be present in an amount of from about 0.01 to about 10 wt.% of the total reaction mixture. The "reaction mixture" being the pseudowollastonite precursor, flux and any other component or additive (if present). Optionally, the flux is present in an amount of from about 0.5 to about 8 wt.%, conveniently from about 1 to about 6 wt.%, more conveniently from about 2 to about 4 wt.%, even more conveniently from about 2 to about 3 wt.%.

### Optional method steps

The method may further comprise the step of milling the synthetic acicular wollastonite. The method may further comprise a first coarse milling step and a second fine milling step. The first coarse milling step may be performed, for example, using a crusher. The second coarse milling step may be performed, for example in a jet mill. However, the skilled person is not limited to the particular milling equipment mentioned and may use any suitable milling equipment in the art.

### Synthetic acicular wollastonite

According to the present invention, there is provided a synthetic acicular wollastonite, the synthetic acicular wollastonite obtained or obtainable by the method described above.

According to the present invention, there is also provided a synthetic acicular wollastonite, having a contact angle at 0.1 seconds from about 40° to about 120°.

The synthetic acicular wollastonite may have a contact angle at 0.1 seconds from about 40° to about 100°, conveniently from about 45° to about 95°, more conveniently from about 46° to about 91°.

Contact angle may be measured using FibroDat equipment, for example DAT Dynamic Absorption Tester Model 68-96, for example in accordance with TAPPI T558 & ASTM D-5725, wherein the test liquid is water.

In more detail, the water contact angle was measured using a FIBRODAT 1100 Dynamic Absorption and Contact Angle Tester (available from FIBRO System, the Netherlands) kept in an air-conditioned room at 23°C and 50% relative humidity. The synthetic acicular wollastonite sample was pressed into a compressed disc or tablet having a density of about 1.5 g/cm3 and a thickness of about 2 mm using a hand-held press. Six of these thin discs/tablets were fitted into the relevant bar into the instrument and deionized water was added to the surface of each disc as 10 microliter droplets with a stroke pulse of 6 (this being a measure of the force at which the water droplet is expelled from the syringe tip of the FIBRO DAT 1100). The change in contact angle of the water droplets on the mineral surface was monitored with time and the results measured after 0.1 seconds (when the droplets were first stable on the pressed disc surfaces) were recorded. More hydrophobic surfaces give a higher water contact angle.

The elemental composition of the synthetic acicular wollastonite may be determined using X-ray based methods, for example, Energy Dispersive X-Ray Fluorescence (EDXRF) as set out in the Examples (for example using the XRF Panalytical Zetium available from Malvern Panalytical, UK. The elemental composition of the synthetic mineral product determined using EDXRF may be expressed in terms of the oxide equivalents of the elements present, as is standard in the field.

The synthetic acicular wollastonite may, as determined by X-ray fluorescence spectroscopy, have a purity of about 95 % or more, conveniently about 96% or more, more conveniently about 97% or more, even more conveniently about 98 % or more, such as 99%. The purity of the synthetic acicular wollastonite means that it comprises mostly SiO₂ and CaO. For example, the synthetic acicular wollastonite may comprise about 40 wt. % to about 60 wt. %, for example, from about 45 wt. % to about 55 wt. %, or from about 48 wt. % to about 52 wt. %, SiO₂; and from about 30 wt. % to about 60 wt. %, for example, from about 42 wt. % to about 52 wt. %, or from about 45 wt. % about 50 wt. %, CaO.

The synthetic acicular wollastonite may have an aspect ratio of about 3:1 or greater, for example, about 5:1 or greater. The synthetic acicular wollastonite may have an aspect ratio of from about 3:1 to about 8:1, conveniently from about 3:1 to about 7:1, more conveniently from about 4:1 to about 6:1, even more conveniently about 5:1. The particle shape of the synthetic wollastonite may be observed by imaging in a scanning electron microscope (SEM).The aspect ratio is essentially calculated by assessing the length of the synthetic acicular wollastonite and dividing it by the width of the synthetic acicular wollastonite.

Particle size properties of particulate materials may be determined by sedigraph (i.e., sedimentation) or by laser diffraction.

In the sedimentation technique, particle size properties are as measured in a well-known manner by sedimentation of the particulate material in a fully dispersed condition in an aqueous medium using a Sedigraph III machine as supplied by Micromeritics Instruments Corporation, Norcross, Georgia, USA (www.micromeritics.com), and based on application of Stokes' Law. Such a machine provides measurements and a plot of the cumulative percentage by weight of particles having a size, referred to in the art as the 'equivalent spherical diameter' (e.s.d), less than given e.s.d values. The mean particle size d_{50sedi} is the value determined in this way of the particle e.s.d at which there are 50% by weight of the particles which have an equivalent spherical diameter less than that d₅₀ value. The d_{95sedi} value is the value at which 95% by weight of the particles have an esd less than that d_{95sedi} value. Particle size properties may be determined in accordance with ISO 13317-3:2001, or any method equivalent thereto.

Particle size properties of particulate materials may be determined by laser diffraction. In the laser diffraction technique, particle size properties are measured by wet Malvern laser scattering (standard ISO 13320-1:2020). In this technique, the size of particles in powders, suspensions and emulsions may be measured using the diffraction of a laser beam, based on the application of Fraunhofer theory. Such a machine, for example a Malvern Mastersizer 3000 - Hydro LV (as supplied by Malvern instruments) provides measurements and a plot of the cumulative percentage by volume of particles having a size, referred to in the art as the "equivalent spherical diameter" (e.s.d), less than given e.s.d values. The mean particle size d₅₀ is the value determined in this way of the particle e.s.d. at which there are 50% by weight of the particles which have an equivalent spherical diameter less than that d₅₀ value. For the avoidance of doubt, the measurement of particle size using laser light scattering is not an equivalent method to a sedimentation method.

The synthetic acicular wollastonite may have a d₉₅, by laser, less than about 20 µm, such as from about 5 µm to about 15 µm, conveniently from about 6.5 µm to about 14 µm, more conveniently from about 8 µm to about 13 µm.

The synthetic acicular wollastonite may have a d₇₅, by laser, less than about 12 µm such as from about 3 µm to about 10 µm, conveniently from about 3.5 µm to about 8.5 µm, more conveniently from about 4 µm to about 7 µm.

The synthetic acicular wollastonite may have a d₈₀, by laser, less than about 6 µm. In an embodiment of the present invention, the synthetic acicular wollastonite has a d₈₀, by laser, from about 1 µm to about 8 µm, conveniently from about 1.5 µm to about 6 µm, more conveniently from about 2 µm to about 5 µm.

The synthetic acicular wollastonite may have a d₂₅, by laser, less than about 5.5 µm. In an embodiment of the present invention, the synthetic acicular wollastonite has a d₂₅, by laser, from about 0.5 µm to about 5 µm, conveniently from about 1 µm to about 4 µm, more conveniently from about 1 µm to about 3 µm.

The synthetic acicular wollastonite may have a d₉₅, by laser, from about 5 µm to about 15 µm; a d₇₅, by laser, from about 3 µm to about 10 µm; a d₅₀, by laser, from about 1 µm to about 8 µm; and a d₂₅, by laser, from about 0.5 µm to about 5 µm. Preferably, the synthetic acicular wollastonite has a d₉₅, by laser, from about 6.5 µm to about 14 µm; a d₇₅, by laser, from about 3.5 µm to about 8.5 µm; a d₈₀, by laser, from about 1.5 µm to about 6 µm; and a d₂₅, by laser, conveniently from about 1 µm to about 4 µm. More preferably, the synthetic acicular wollastonite has a d₉₅, by laser, from about 8 µm to about 13 µm; a d₇₅, by laser, from about 4 µm to about 7 µm; a d₅₀, by laser, from about 2 µm to about 5 µm; and a d₂₅, by laser, from about 1 µm to about 3 µm.

The synthetic acicular wollastonite may have a d₉₅, by sedigraph, less than about 20 µm, such as from about 5 µm to about 15 µm, conveniently, from about 5 µm to about 10 µm.

The synthetic acicular wollastonite may have a d₇₅, by sedigraph, less than about 12 µm such as from about 1 µm to about 10 µm, conveniently from about 3 µm to about 7 µm.

The synthetic acicular wollastonite may have a d₈₀, by sedigraph, less than about 10 µm. such as from about 1 µm to about 8 µm, conveniently from about 2 µm to about 5 µm,

The synthetic acicular wollastonite may have a d₂₅, by sedigraph, less than about 6 µm such as from about 0.5 µm to about 5 µm, conveniently from about 1 µm to about 3 µm.

The synthetic acicular wollastonite may have a d₉₅, by sedigraph, from about 5 µm to about 15 µm; a d₇₅, by sedigraph, from about 1 µm to about 10 µm; a d₅₀, by sedigraph, from about 1 µm to about 8 µm; and a d₂₅, by sedigraph, from about 0.5 µm to about 5 µm. Preferably, the synthetic acicular wollastonite has a d₉₅, by sedigraph, from about 5 µm to about 10 µm; a d₇₅, by sedigraph, from about 3 µm to about 7 µm; a d₅₀, by sedigraph, from about 2 µm to about 5 µm; and a d₂₅, by sedigraph, from about 1 µm to about 3 µm.

The BET surface area of a particulate material refers to the area of the surface of the particles with respect to unit mass, determined according to the BET method by the quantity of nitrogen adsorbed on the surface of said particles so as to form a monomolecular layer completely covering said surface (measurement according to the BET method, NF X11-621-1975). Details of the BET specific surface area measurement method used in the preparation of the present application are set out in the Examples.

The synthetic acicular wollastonite has BET surface area no greater than about 10 m²/g, conveniently no greater than about 5 m²/g, more conveniently no greater than about 3 m²/g. Preferably, the synthetic acicular wollastonite has a BET surface area of from about 0.1 m²/g to about 10 m²/g, conveniently from about 0.1 m²/g to about 5 m²/g, more conveniently from about 1 m²/g to about 3 m²/g.

Brightness values for a particulate material can be determined using a spectrophotometer fulfilling the requirements of ISO 7724-1984, for example, a Konica Minolta CM-3700d spectrophotometer with D65 illuminant and collar space CIE LAB (1976), with a standard 10° observer.

The synthetic acicular wollastonite has a D65-10° brightness characterised by tristimulus values: X no less than about 80, conveniently no less than about 85, more conveniently no less than about 88; Y no less than about 85, conveniently no less than about 90, more conveniently no less than about 93; and Z no less than about 85, conveniently no less than about 93, more conveniently no less than about 96.

### Paint compositions

The synthetic acicular wollastonite described herein may be used as a filler in a paint composition. The synthetic acicular wollastonite may be used as a functional filler. As used herein, the term "functional filler" is understood to mean an additive incorporated into a paint composition with a view to enhancing one or more of its physical (e.g., mechanical and/or optical) properties.

Thus, there is also provided herein a paint composition comprising a synthetic acicular wollastonite as described herein. In particular, there is provide a paint composition comprising a synthetic acicular wollastonite as described herein and a paint component.

The paint composition may comprise no less than 2 wt.% of the synthetic acicular wollastonite, based on the total weight of the paint composition. In an embodiment of the present invention, the paint composition comprises no less than 3 wt.%, conveniently no less than 5 wt.%, more conveniently no less than 8 wt.%, of the synthetic acicular wollastonite, based on the total weight of the paint composition. In a preferred embodiment of the present invention, the paint composition comprises from about 2 to about 20 wt.%, conveniently, from about 3 to about 15 wt.%, more conveniently from about 5 to about 10 wt.%, more conveniently, from about 6 to about 9 wt.%, of the synthetic acicular wollastonite, based on the total weight of the paint composition.

The term "paint component" refers to an ingredient other than the synthetic acicular wollastonite which form the paint composition. The paint component may comprise at least one of an additive, a pH modifier, a pigment or a binder.

Suitable additives include dispersing agents (e.g. polymeric non-ionic dispersing agents), defoaming agents (e.g. silicon and/or silicon-free defoaming agents), flow agents, surfactants, wetting agents and rheology modifiers.

Suitable pH modifiers include amines, sodium hydroxide, amino alcohol, and ammonia.

Suitable pigments include inorganic or organic pigments (inorganic or organic substances that provide a characteristic colour). Pigments may also assist in providing UV protection to the film.

Examples of inorganic pigments are cadmium pigments, chromium pigments, cobalt pigments, copper pigments, iron oxide, lead pigments, manganese pigments, mercury pigments, titanium pigments, zinc pigments, aluminium pigments, carbon pigments, clay earth pigments, and ultramarine pigments.

Examples of organic pigments are alizarin, azo-pigments, phthalocyanine pigments, and quinacridone pigments.

Suitable binders include polyacrylates, polyesters, polyamides, polyurethanes, polyimides, polyurea, polyethers, polysilicones, vinyl acetate ethylene (VAE), styrene acrylates, fatty acid esters, epoxies,as well as amine, alcohol, acid, ketone, ester, fluorinated, and aromatic functionalized versions of these polymer resins and physical blends and copolymers of the same.

The paint composition may have a density, by pycnometer according to ISO 2811-1:2016, no less than about 1.2 g/cm³. In an embodiment of the present invention, the paint composition has a density, by pycnometer according to ISO 281101:2016, from about 1.2 g/cm³ to about 1.8 g/cm³, conveniently from about 1.3 g/cm³ to about 1.7 g/cm³, more conveniently from about 1.4 g/cm³ to about 1.6 g/cm³.

The paint composition may have a viscosity, by Krebs Viscometer Braive KU1+ according to ASTM D562-01, no less than 85 KU. In an embodiment of the present invention, the paint composition has a viscosity, by Krebs Viscometer Braive KU1+ according to ASTM D562-01, no less than 86 KU, conveniently no less than 88 KU, more conveniently no less than 90 KU.

The paint composition may have a D65-10° brightness characterised by stimulus value Y no less than about 80. In an embodiment of the present invention, the paint composition has a D65-10° brightness characterised by stimulus value Y no less than about 85, conveniently no less 88, more conveniently, no less than 90. Brightness values for a paint composition can be determined using a spectrophotometer fulfilling the requirements of ISO 7724, for example, a Konica Minolta CM-3700d spectrophotometer with D65 illuminant and color space CIE LAB (1976), with a standard 10° observer.

The paint composition may have a gloss value measured at 60°, by Gloss meter (such as Micro-TRI-gloss available from Byk Gardner) according to ISO 2813:1994, no more than 10 GU. In an embodiment of the present invention, the paint composition has a gloss value measured at 60°, by Gloss meter (such as Micro-TRI-gloss available from Byk Gardner) according to ISO 2813:1994, no more than 7 GU, conveniently no more than 5 GU, more conveniently no more than 3 GU.

The paint composition may have a gloss value measured at 80°, by Gloss meter (such as Micro-TRI-gloss available from Byk Gardner) according to ISO 2813:1994, no more than 12 GU. In an embodiment of the present invention, the paint composition has a gloss value measured at 80°, by gloss meter (such as Micro-TRI-gloss available from Byk Gardner) according to ISO 2813:1994, no more than 9 GU, conveniently no more than 7 GU, more conveniently no more than 5 GU.

The paint composition may have an opacity at 8 m²/L, by spectrophotometer (such as Spectrogloss: portative colorimeter available from Byk Gardner) according to ISO 6504-3:2006, no less than 92%. In an embodiment of the present invention, the paint composition has an opacity at 8 m²/L, by spectrophotometer (such as Spectrogloss: portative colorimeter available from Byk Gardner) according to ISO 6504-3:2006, no less than 94%, conveniently no less than 96%, more conveniently no less than 98%.

### Uses of the synthetic acicular wollastonite

According to the present invention, there is provided use of the synthetic acicular wollastonite as described herein in a paint composition to:
a. increase the brightness of the paint composition; and/or
b. increase the opacity of the paint composition;
as compared to a reference paint composition comprising the same amount of natural wollastonite or a wollastonite substitute not according to the present invention.

According to present invention, there is also provided a method of:
a. increasing the brightness of a paint composition; and/or
b. increasing the opacity of a paint composition;
as compared to a reference paint composition comprising a reference amount of natural wollastonite or a wollastonite substitute not according to the present invention, wherein the method comprises adding the synthetic acicular wollastonite described herein to the paint composition in the reference amount.

### EXAMPLES

### Example 1

A synthetic acicular wollastonite was prepared as follows.

A raw mixture was prepared by selecting a silica-containing material (silica sand) and calcium-containing material (limestone).

**Table 1**

| **Component of mixture** | **Amount present in mixture (wt. %)** |
|---|---|
| Silica sand* | 51.7 |
| Limestone** | 48.3 |

| | |
|---|---|
| * Silica sand available from Sibelco ** Limestone (Limestone available from Samin) | |

The mixture was co-milled in a ball mill to achieve a d₅₀ particle size, as measured by laser, of about 80 µm. Batches of 700 - 800 g were calcined at between 1400 to 1450 °C for 8 hours.

The resulting synthetic pseudowollastonite was cooled and then subjected to a second calcination step. In the second calcination step, the synthetic pseudowollastonite was calcined at 1070 °C for 8 hours in the presence of 2.6 wt% Lithium tetraborate (34% LiBO₂ + 66% Li₂B₄O₇).

The resulting synthetic mineral product was cooled and then roughly milled in a hammer mill, and then milled for targeted fineness in a jet mill.

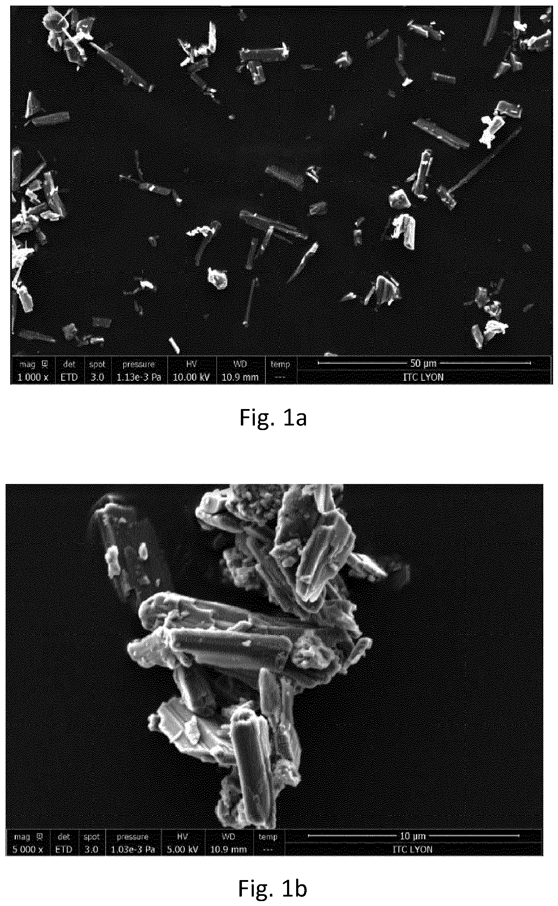

Scanning electron microscopy (SEM) was used to check the acicular morphology. Figure 1 shows the SEM pictures of the obtained acicular wollastonite. The acicularity was measured by assessing the length of the synthetic wollastonite and dividing it by the width of the synthetic wollastonite. An aspect ratio of 5 was obtained.

The purity of the synthetic acicular wollastonite was analysed using XRF and is reported in Table 2 below.

**Table 2**

| **Phases (%)** | **Wollastonite (natural)** | **Pseudowollastonite** | **Quartz** | **Cristobalite** |
|---|---|---|---|---|
| Before milling | 98.8 | 0.6 | 0.4 | 0.2 |

The final product has a very high amount of acicular wollastonite (98.8%).

### Example 2

### General properties

Particle size values, specific surface area and whiteness values were determined for the synthetic acicular wollastonite prepared in Example 1 and compared to natural wollastonite M1250 and synthetic pseudowollastonite. The conditions for measurement of the particle size values, specific surface area and whiteness values are the same as described above.

**Table 3**

| **Test** | **Parameter** | **Acicular wollastonite** | **Natural wollastonite M 1250** |
|---|---|---|---|
| Sedigraph | D95 (µm) | 6,7 | 13.0 |
| | D75 (µm) | 3,8 | 7.3 |
| | D50 (µm) | 2,7 | 4.0 |
| | D25 (µm) | 1,6 | 1.8 |
| Laser | D95 (µm) | 12,7 | 18.4 |
| | D75 (µm) | 6,3 | 7.5 |
| | D50 (µm) | 4,1 | 3.9 |
| | D25 (µm) | 2,7 | 2.0 |
| N2 sorption | BET (m²/g) | 2,6 | 3.4 |
| Whiteness | X | 88,5 | 87.1 |
| | Y | 93,3 | 91.8 |
| | Z | 96,6 | 96.0 |

The results demonstrate that the synthetic acicular wollastonite has a finer particle size distribution than the natural wollastonite. By laser, the D95 is 18.4 µm for natural wollastonite, while it is only 12.7 µm for synthetic wollastonite.

The synthetic acicular wollastonite was also shown to have a higher Y value than the natural wollastonite. This can be related to the synthetic wollastonite having a higher purity.

### Contact angle

The contact angle was measured on both natural wollastonite and synthetic acicular wollastonite using Fibrodat equipment (as described above).The natural wollastonite and synthetic acicular wollastonite were uncoated.

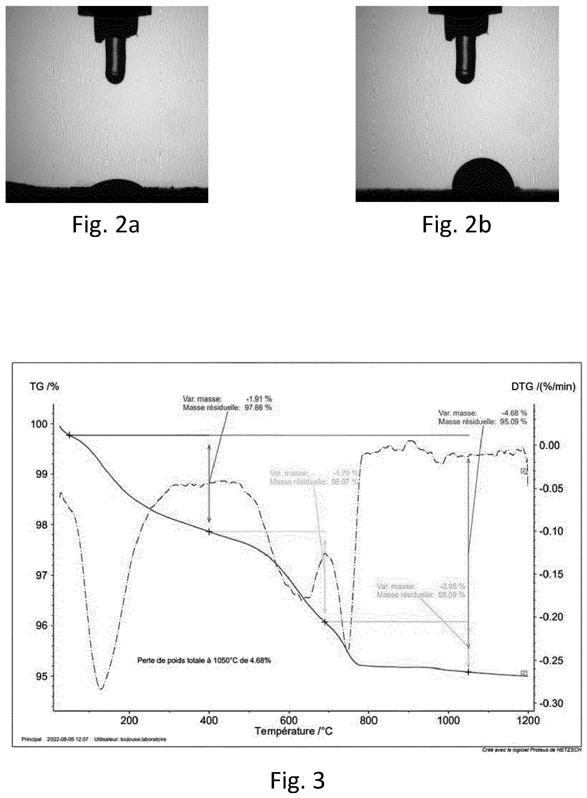

Figure 2 shows that the contact angle of the synthetic acicular wollastonite (right image) was higher than the contact angle of natural wollastonite M4W (left image).

The increased contact angle can be quantified by evaluating the contact angle after a given amount of time. In the present case, the contact angle was evaluated at 0.1 seconds. The results obtained at 0.1 seconds for synthetic acicular wollastonites prepared according to the method of the present invention and natural wollastonites (no surface treatment) are reported in Table 4 below.

**Table 4**

| **Wollastonite** | **Contact angle at 0.1 s** |
|---|---|
| M4W (Natural wollastonite with no surface treatment) | 24° |
| Synthetic acicular wollastonite 1 (Calcination with Li₂B₄O₇ for 8 hours) | 80° |
| Synthetic acicular wollastonite 2 (Calcination with Li₂B₄O₇ for 16 hours) | 91° |
| Synthetic acicular wollastonite 3 (Calcination with Li₂CO₃ for 8 hours) | 46° |
| Synthetic acicular wollastonite 4 (Calcination with colemanite for 8 hours) | 80° |

The results demonstrate that compared to natural wollastonite with no surface treatment, the synthetic acicular wollastonite shows a higher contact angle. The natural wollastonite has a contact angle of 24° while the synthetic acicular wollastonite has a contact angle ranging from 46° to 91°. Synthetic acicular wollastonite prepared according to the present invention but using different fluxes and calcination times showed similar results.

These results demonstrate that synthetic acicular wollastonites prepared according to the present invention are more hydrophobic than their natural counterparts.

*Thermo gravimetric analysis (TGA) and Differential thermogravimetric analysis (DTG)*

Thermo gravimetric analysis (TGA) and differential thermogravimetric analysis (DTG) were performed.

Thermogravimetric analysis (TGA) and (DTG) may be measured thanks to a Thermoanalysor NETZSCH STA 409C 1600 °C, available from Netzsch, at temperatures ranging from 50°C to 1000°C under N2 flow and an increased temperature rate of 10°C/min.

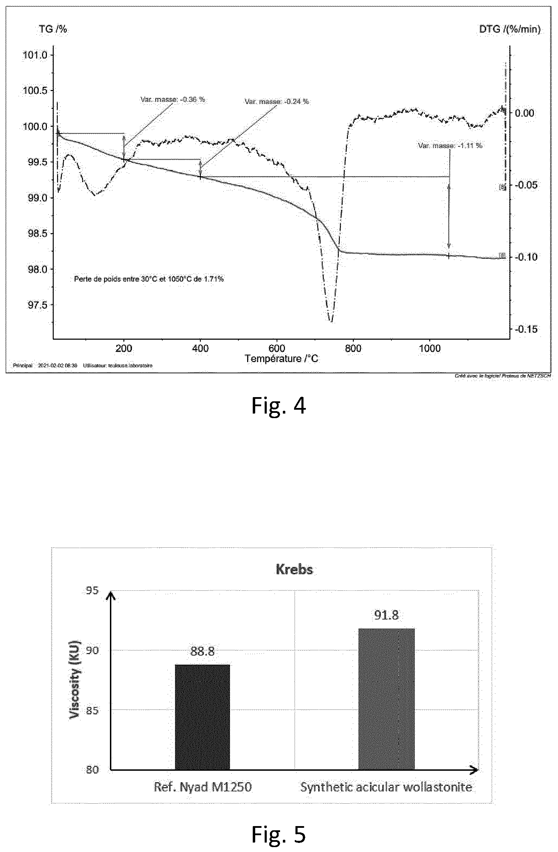

Figures 3 and 4 show the TGA and DTG analysis for the synthetic acicular wollastonite (as prepared in Example 1) and reference natural wollastonite Nyad M1250 respectively.

A higher mass loss was observed for the synthetic acicular wollastonite compared to reference natural wollastonite Nyad M1250.

### Example 3

Decorative paint formulations comprising natural wollastonite Nyad M1250 and synthetic acicular wollastonite (as prepared in Example 1) were prepared.

**Table 5**

| | **Nyad M1250** | **Synthetic acicular wollastonite** |
|---|---|---|
| Water | 36.1 | 36.1 |
| Additives (biocide, dispersant, defoamer, thickeners) | 1.7 | 1.7 |
| Ammonia (pH modifier) | 0.1 | 0.1 |
| Tioxide TR 92 (TiO₂) | 15.0 | 15.0 |
| ImerCarb 40 (GCC) | 17.0 | 17.0 |
| Luzenac 0 (Talc) | 6.0 | 6.0 |
| Wollastonite (natural or synthetic) | 8.0 | 8.0 |
| Mowilith LDM 1871 (VAE binder) | 16.0 | 16.0 |
| **Total, wt%** | 100.0 | 100.0 |
| PVC, % | 66.8 | |
| CPVC, % | 62.2 | |
| PVC/CPVC | 1.07 | |

The viscosity of the decorative paint formulations was determined using a Krebs Viscometer Braive KU1+ according to ASTM D562-01. The results are shown in Figure 5. The results demonstrate that the viscosity of the paint formulations comprising wollastonite was similar for natural wollastonite and synthetic acicular wollastonite samples.

The paint formulations were applied to a surface and then the optical properties of the dry paint film were tested. The brightness Y, gloss and opacity were measured. The conditions for measurement of the brightness Y, gloss values and opacity are the same as those described above.

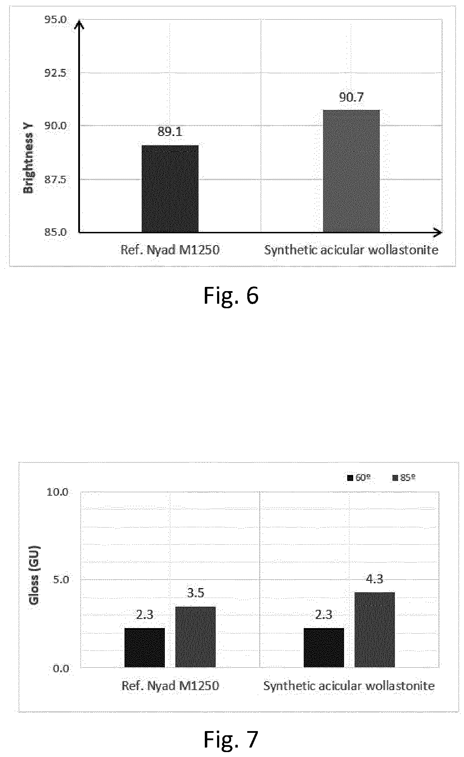

The results demonstrate that the paint formulation containing synthetic acicular wollastonite has a higher brightness (Figure 6) and a similar gloss (Figure 7) compared to the paint formulation containing natural wollastonite Nyad M1250.

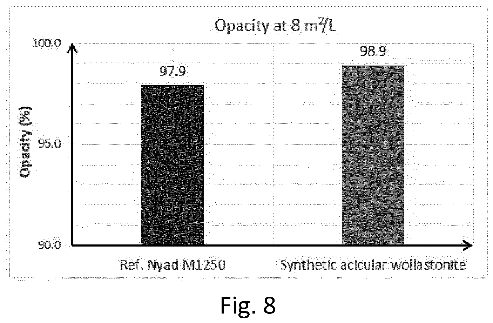

The results also demonstrate that the paint formulation containing synthetic acicular wollastonite has a significantly higher opacity than the paint formulation containing natural wollastonite M1250 (Figure 8).

Table 6 summarizes the performance of paint formulations containing synthetic acicular wollastonite.

**Table 6**

| | **Reference natural wollastonite Nyad M1250** | **Synthetic acicular wollastonite** |
|---|---|---|
| Density (g/cm³) | 1.49 | 1.48 |
| Viscosity (Krebs) | 88.8 | 91.8 |
| Viscosity (ICI)* | 0.5 | 0.6 |
| Gloss (85°) | 3.5 | 4.3 |
| Brightness | 89.1 | 90.7 |
| L* | 95.9 | 96.3 |
| b* | 2.3 | 2.2 |
| Opacity at 8 m²/L (%) | 97.9 | 98.9 |
| Consumption for 98% of opacity (m²/L) | 7.8 | 9.8 |
| Scrub resistance: thickness loss (µm) and class | 6.2 (class 2) | 9.5 (class 2) |

| | | |
|---|---|---|
| *by Viscometer CAP 1000 Brookfield according to ISO 2884-1: 2003 | | |

The added value of synthetic acicular wollastonite over natural wollastonite can be seen as it provides a higher opacity in decorative paints. At 98%, it is possible to cover 9.8 m²/L of surface with the paint formulation containing synthetic acicular wollastonite, while it is only possible to cover 7.8 m²/L of surface with the paint formulation containing natural wollastonite Nyad M1250.

## Claims

1. A method of making a synthetic acicular wollastonite, the method comprising:
(i) providing a pseudowollastonite precursor; and
(ii) heating the pseudowollastonite precursor at a temperature of from about 950 °C to about 1200 °C, in the presence of a flux, to form the synthetic acicular wollastonite.

2. The method according to claim 1, wherein the method in step (ii) comprises heating the pseudowollastonite precursor in the presence of a flux at a temperature of from about 1000 to about 1100 °C, preferably from about 1050 °C to about 1100 °C.

3. The method according to claim 1 or claim 2, wherein the flux is selected from the group consisting of hydrogen, lithium, boron, magnesium, calcium, and/or sodium, under the form of carbonate, oxide, halide, silicate and/or borate.

4. The method according to claim 3, wherein the flux is selected from the group consisting of an alkali metal carbonate, an alkali metal oxide, an alkali metal halide, an alkali metal silicate, an alkali metal borate, an alkaline earth metal carbonate, an alkaline earth metal oxide, an alkaline earth metal halide, an alkaline earth metal silicate, an alkaline earth metal borate, a group 13 element oxide, a hydrogen borate, and combinations thereof.

5. The method according to claim 4, wherein the flux is selected from the group consisting of lithium tetraborate, lithium metaborate, lithium carbonate, sodium carbonate, sodium iodide, boric acid, diboron trioxide, hydrated calcium borate (such as colemanite or Gerstley colemanite), hydrate magnesium silicate (such as talc), calcium magnesium carbonate (such as dolomite), and combinations thereof.

6. The method according to any one of the preceding claims, wherein the flux is present in an amount of about from 0.01 to about 10 wt.%, for example, from about 1 to about 5 wt.% or from about 2 to about 3 wt.%.

7. A synthetic acicular wollastonite, the synthetic acicular wollastonite obtained or obtainable by the method according to any preceding claim.

8. A synthetic acicular wollastonite having a contact angle at 0.1 seconds from about 40° to about 120°, for example, from about 45° to about 95°.

9. A synthetic acicular wollastonite according to 7 or 8, wherein:
a. the synthetic acicular wollastonite has, as determined by X-ray fluorescence spectroscopy, a purity of about 95 % or more, preferably about 98 % or more;
b. the synthetic acicular wollastonite has an aspect ratio of about 3 to about 8, preferably about 5;
c. the synthetic acicular wollastonite has a d₉₅, by laser, less than about 15 µm;
d. the synthetic acicular wollastonite has:
a d₉₅, by laser, from about 5 µm to about 15 µm, for example, from about 8 µm to about 13 µm;
a d₇₅, by laser, from about 3 µm to about 10 µm, for example, from about 4 µm to about 7 µm;
a d₅₀, by laser, from about 1 µm to about 8 µm, for example, from about 2 µm to about 5 µm;
a d₂₅, by laser, from about 0.5 µm to about 5 µm, for example, from about 1 µm to about 3 µm;
a d₉₅, by sedigraph, from about 5 µm to about 15 µm, for example, from about 5 µm to about 10 µm;
a d₇₅, by sedigraph, from about 1 µm to about 10 µm, for example, from about 3 µm to about 7 µm;
a d₅₀, by sedigraph, from about 1 µm to about 8 µm, for example, from about 2 µm to about 5 µm; and/or
a d₂₅, by sedigraph, from about 0.5 µm to about 5 µm, for example, from about 1 µm to about 3 µm;
e. the synthetic acicular wollastonite has BET surface area no greater than about 10 m²/g, for example, no greater than about 5 m²/g, or no greater than about 3 m²/g, or from about 0.1 m²/g to about 10 m²/g, or from about 0.1 m²/g to about 5 m²/g, or from about 0.1 m²/g to about 3 m²/g;
f. the synthetic acicular wollastonite has a D65-10° brightness **characterised by** tristimulus values: X no less than about 80, for example, no less than about 85, or no less than about 88; Y no less than about 85, for example, no less than about 90 or no less than about 93; and Z no less than about 85, for example, no less than about 93 or no less than about 96;
and/or
g. the synthetic wollastonite has an aspect ratio of about 3:1 or greater, for example, about 5:1 or greater.

10. A paint composition comprising the synthetic acicular wollastonite according to any one of claims 7 to 9 and a paint component.

11. The paint composition according to claim 10, wherein the paint component comprises at least one of an additive, a pH modifier, a pigment or a binder.

12. Use of the synthetic acicular wollastonite according to any one of claims 7 to 9 in a paint composition to:
a. increase the brightness of the paint composition; and/or
b. increase the opacity of the paint composition;
as compared to a reference paint composition comprising the same amount of natural wollastonite or a wollastonite substitute not according to claims 7 to 9.

13. A method of:
a. increasing the brightness of a paint composition; and/or
b. increasing the opacity of a paint composition;
as compared to a reference paint composition comprising a reference amount of natural wollastonite or a wollastonite substitute not according to claims 7 to 9, wherein the method comprises adding the synthetic acicular wollastonite according to any one of claims 7 to 9 to the paint composition in the reference amount.
